# Europäisches Patentamt
# European Patent Office
# Office européen des brevets

(19)

(11) Veröffentlichungsnummer: **0 192 730**
**B1**

(12) **EUROPÄISCHE PATENTSCHRIFT**

(45) Veröffentlichungstag der Patentschrift:
06.12.89

(21) Anmeldenummer: **85904482.8**

(22) Anmeldetag: **10.09.85**

(86) Internationale Anmeldenummer:
**PCT/HU 85/00056**

(87) Internationale Veröffentlichungsnummer:
**WO 86/01958 (27.03.86 Gazette 86/07)**

(51) Int. Cl.⁴: **H 04 B 7/04**

(54) **ÜBERTRAGUNG VON INFORMATIONEN MIT GERICHTETEN STRAHLENBÜNDELN VON ELEKTROMAGNETISCHEN WELLEN MIT EINER WELLENLÄNGE BIS 10MM.**

(30) Priorität: **10.09.84 HU 340784**

(43) Veröffentlichungstag der Anmeldung:
**03.09.86 Patentblatt 86/36**

(45) Bekanntmachung des Hinweises auf die Patenterteilung:
**06.12.89 Patentblatt 89/49**

(84) Benannte Vertragsstaaten:
**AT DE FR GB SE**

(56) Entgegenhaltungen:
**DE-B-1 041 113**
**DE-B-1 226 667**
**US-A-2 985 875**
**US-A-3 646 443**
**US-A-3 934 204**

(73) Patentinhaber: **TAVKÖZLESI KUTATO INTEZET, Gabor Aron utca 65, H-1126 Budapest (HU)**

(72) Erfinder: **JESZENOI, Péter, Arpád fejedelem utja 69, H-1036 Budapest (HU)**
Erfinder: **ZORKOCZY, Zoltán, Menyecske utca 9, H-1112 Budapest (HU)**

(74) Vertreter: **Lehn, Werner, Dipl.- Ing., Hoffmann, Eitle & Partner Patentanwälte Arabellastrasse 4, D-8000 München 81 (DE)**

LIBER, STOCKHOLM 1989

**Beschreibung**

Die Erfindung betrifft ein Verfahren zur Übertragung von Informationen im Freien mittels elektromagnetischer Wellen mit gerichtetem Strahlenbündel und einer Wellenlänge kleiner als 10 mm, sowie eine Vorrichtung zur Durchführung des Verfahrens, wobei die elektromagnetische Welle die zu übertragende Information in modulierter Form enthält.

Es ist bekannt, daß in den üblichen Nachrichtenübertragungsbändern der Informationsübertragung die Zuverlässigkeit der Verbindung durch den Fadingeffekt (Interferenzschwund), der durch infolge der Signalausbreitung in mehrere Richtungen entstehende Interferenz hervorgerufen wird, verringert wird. Der Schutz dagegen kann in Abhängigkeit von der Art der Ausbildung dieser Erscheinung unterschiedlich sein.

In den Radiobändern des Kurzwellenbereiches kann durch die Anwendung von mindestens zwei Sendefrequenzen der Einfluß der Interferenz aufgehoben werden (Frequenz-Diversity). Bei dieser Lösung sind entsprechend gewählte, auf unterschiedlicher Frequenz ausstrahlende, jedoch mit gleichem Signal modulierte Sender und mindestens zwei unabhängig auf die Sender abgestimmte Empfänger erforderlich. Die demodulierte Information gelangt aus beiden Empfängern in einen Diversity-Schalter, der das jeweilige Signal von besserer Empfangsqualität auswählt und an den Verwendungsort weiterleitet.

Eine solche Zusammenstellung stellt praktisch zwei unabhängige Verbindungen mit einer Wellenlängenauswahl dar, wobei die Wahrscheinlichkeit der gleichzeitigen Schwunderscheinung bei beiden Verbindungen außerordentlich gering ist.

In den dm- und cm-Frequenzbereichen ist die Anwendung einer Raumdiversity verbreitet, die mindestens zwei Empfänger und einen Sender aufweist. Bei diesen Lösungen wird das Signal eines Senders durch zwei oder mehrere in einem Abstand von etwa 100 λ angeordnete Antennen empfangen. Das empfangene Signal wird in unabhängige Empfänger geleitet. λ stellt hier die Wellenlänge der verwendeten elektromagnetischen Welle dar. Die Auswahl des einen günstigeren Empfang sichernden Signals wird auch hierbei durch einen Diversity-Schalter vorgenommen. Eine Richtfunkstrecke, bei der in beiden Übertragungsrichtungen vom Prinzip des räumlichen Mehrfachempfangs mit Diversity-Systemen Gebrauch gemacht wird, ist aus der DE-AS-1 041 113 bekannt.

In den mm-Mikrowellen- und optischen Bändern tritt die Erscheinung auf, daß die durch die Atmosphärenturbulenz hervorgerufene schnelle Intensitätsänderung größere Störungen als die bei der Signalausbreitung in mehrere Richtungen durch die Interferenz hervorgerufene Schwunderscheinung (fading) zur Folge hat. Die infolge der Vermischung von Teilen der turbulenten Atmosphäre, die über eine unterschiedliche Dichte und somit über einen unterschiedlichen Brechungsindex verfügen, auftretende Turbulenzerscheinung führt dazu, daß das informationstragende Strahlenbündel gesammelt, zerstreut und abgelenkt wird, wodurch in den mm- und optischen Frequenzbändern (λ = 100 μm bis 200 nm) eine schnelle Intensitätsänderung hervorgerufen wird. Da in der Atmosphäre das Maß der Störungen verursachenden Turbulenzerscheinungen in der Größenordnung von mm bis dm liegt, ist die als Szintillation, Funkeleffekt genannte Erscheinung besonders dann störend, wenn die verwendete Wellenlänge und auch der Durchmesser des Strahlenbündels kleiner als die Größe der Turbulenzerscheinung sind. Die Anwendung von Bändern mit derartigen kurzen Wellenlängen ist wegen der bei kleinen Antennenabmessungen erreichbaren kleinen kegelförmigen Bündelung vorteilhaft (kleine Abmessungen, geringes Gewicht, geringer Antennenpreis). Zur Eliminierung des Funkeleffektes werden allgemein Sendeantennen mit einem Durchmesser in der Größenordnung von 0,4 - 1,5 m verwendet, wodurch gerade der Vorteil der für den mm- und optischen Bereich charakteristischen kleinen Antennengröße aufgehoben wird. Ein weiterer Nachteil besteht darin, daß die bei den Mikrowellenantennen übliche Formgenauigkeit von λ/8 bis λ/16 bei den Antennen mit einem Durchmesser von 0,4 bis 1,5 m nur mit relativ hohen Kosten realisiert werden kann, während im optischen Bereich ein hochgenauer Spiegel mit ähnlichen Abmessungen erforderlich ist.

Bei anderen Lösungen wird bei kleinem Sendebündeldurchmesser eine Empfängeranordnung mit zwei oder mehreren Detektoren verwendet, wodurch ein gewisser, jedoch kein ausreichender Schutz gegen die Turbulenz erreicht werden kann.

Wenn eine wesentliche Verzögerung der Informationen zugelassen ist, besteht die Möglichkeit, durch Anwendung eines entsprechenden redundanten oder Fehlerkorrekturcodes die Störwirkung des durch die Turbulenz hervorgerufenen schnellen Schwundes (fading) zu eliminieren.

In den Bändern des optischen Bereiches kann die durch die Turbulenz hervorgerufene zeitweilige Intensitätsverringerung bei Bündeln mit kleinem Austrittsdurchmesser ein solches Ausmaß annehmen, daß beispielsweise bei 820 nm und einem Abstand über 1 km die Verbindung sogar bei einem Fading-Reserve und einer Schnellfadingtoleranz von 40 bis 50 dB zeitweise unterbrochen wird und keine kontinuierliche Informationsübertragung gewährleistet werden kann. Stellt die Nachrichtenübertragung z. B. eine digitale Übertragung dar, ist es üblich, daß anstelle der infolge des Weißrauschens auftretenden, gleichmäßig verteilten Bitfehler durch die Turbulenz hervorgerufen 0,1 bis 100 ms andauernde Ausfälle von Bitpaketen auftreten, die sogar bei noch verhältnismäßig annehmbaren durchschnittlichen Fehlerverhältnissen, z. B. infolge der wegen des Synchronverlustes auftretenden langandauernden Unterbrechungen, derartige Verbin-

3

dungen zeitweise unbrauchbar machen.

In diesen Fällen ist es zu bevorzugen, die Qualität des Übertragungskanals anhand der relativen Zeit des Synchronverlustes (Unterbrechung der Verbindung) als mit dem relativen Wert der einen gewissermaßen korrigierbaren Fehler hervorrufenden Bitausfälle zu charakterisieren.

Das Ziel der Erfindung besteht darin, ein Verfahren zur Informationsübertragung und eine Vorrichtung zur Durchführung des Verfahrens der eingangs genannten Art zu schaffen, mittels dessen bzw. mittels der auch in den Fällen eine Verbindung mit geringem Fehlerverhältnis zustandegebracht werden kann, in denen alle bisher bekannten Diversity-Systeme bereits nicht mehr zu verwenden sind.

Das erfindungsgemäße Verfahren beruht auf der Erkenntnis, daß sich die Intensitäten der durch Sender ausgestrahlten Strahlenbündel vorteilhaft summieren, wenn mehrere, d.h. mindestens zwei Sender in einem Abstand von mindestens 200 mm bis höchstens 3000 mm, jedoch mindestens gleich dem 100fachen der Wellenlänge λ der jeweils verwendeten elektromagnetischen Wellen, voneinander angeordnet und miteinander kohärent moduliert werden. Ein auf der Empfangsseite im gemeinsamen Abschnitt der Strahlenbündel angeordneter Empfänger detektiert die gemeinsame Intensität der Strahlenbündel. Aus der gemeinsamen Intensität kann die zu übertragende Information mit geringerem Fehlerverhältnis reproduziert werden als aus den Signalen von zwei unabhängigen Kanälen.

Das Wesen des erfindungsgemäßen Verfahrens zur Informationsübertragung besteht darin, daß auf der Senderseite mindestens zwei Sender derart angeordnet werden, daß der Strahlungsachsenabstand der Sender voneinander auf mindestens 200 mm bis höchstens 3000 mm, jedoch mindestens gleich dem 100fachen der Wellenlänge λ der jeweils verwendeten elektromagnetischen Welle gewählt wird, wobei λ die Wellenlänge der verwendeten elektromagnetischen Wellen ist, daß danach von den Sendern miteinander kohärent modulierte Strahlenbündel zur Empfangsstelle derart gerichtet werden, daß sich die Strahlenbündel auf der Empfangsseite schneiden.

Auf der Empfängerseite werden dann in dem gemeinsamen Strahlenabschnitt der Strahlenbündel ein Empfänger oder mehrere Empfänger, voneinander in einem Empfangsabstand von mindestens 200 mm bis höchstens 3000 mm, jedoch mindestens gleich dem 100fachen der Wellenlänge λ der jeweils verwendeten elektromagentischen Welle, derart angeordnet, daß jeder der Empfänger in einem gemeinsamen Strahlenabschnitt von mindestens zwei Sendern fällt. Die gemeinsame, resultierende Intensität der in dem Empfänger bzw. den Empfängern ankommenden Strahlenbündel wird detektiert und in ein elektrisches Signal verwandelt und danach wird aus diesem Signal - nach einer vorzugsweise logarithmischen Kompression - die übertragene Information durch Entscheidung reproduziert.

Durch den gleichzeitigen Empfang an mehreren Stellen kann das Fehlerverhältnis der übertragenen Information noch weiter reduziert werden.

Zur Entscheidung sind die bekannten Maßnahmen zu verstehen, anhand derer aus dem während des Empfangs erhaltenen analogen Signal eine digitale Information erzeugt wird.

Es ist vorteilhaft, als Informationsträger intensitätsmodulierte Strahlenbündel mit verteiltem Frequenzspektrum zu verwenden, da auf diese Weise keine Interferenz entstehen kann und die Intensitäten sich einfach summieren. Hinsichtlich der Informationsübertragung kann das Strahlenbündel dann als Bündel mit verteiltem Spektrum angesehen werden, wenn die Spektrumsbreite der Strahlenbündel mindestens doppelt so groß wie die Bandbreite des Modulationssignals gewählt wird.

Bei Anwendung von mehreren Empfängern werden die die Intensitäten der in den Empfängern ankommenden Strahlenbündel charakterisierenden Signale analog summiert, wodurch jeweils das Signal von grösserer Intensität ein entscheidendes Gewicht besitzt. Das Fehlerverhältnis der Informationsübertragung wird vorteilhafter, wenn die Signale vor der Entscheidung, insbesondere vor der Summierung komprimiert werden.

Ein weiterer Vorteil der Kompression besteht darin, dass die Einheiten der Vorrichtung zur Durchführung des Verfahrens nicht überlastet werden, nicht in den Sättigungszustan dübergehen und desweiteren, dass das mit geringerer Intensität ankommende Strahlenbündel ebenfalls bei der Entscheidung zur Richtigstellung der Information eine Rolle spielt. Wenn die Kompression in dem Betriebsbereich der Vorrichtung nach einer logarithmischen Funktion erfolgt, ist das relative Mass der Gewichtung im gesamten Bereich konstant.

Das Wesen der Vorrichtung zur Durchführung des erfindungsgemässen Verfahrens besteht darin, dass auf der Senderseite an den Infornationseingang eine Modulationseinheit angeschlossen ist, an welche sich mindestens zwei Sender anschliessen. Jeder der Sender ist mit einen Strahlenbündelbildner versehen. Auf der Empfängerseite sind ein oder mehrere mit einem Strahlensammler versehene, über eine Auswerter mit einem Informationsausgang verbundene Empfänger angeordnet.

Im Falle von Kompression sind an der Empfängerseite auch ein oder mehrere Kompressoren angeordnet.

Bei einer bevorzugten Ausführungsform der erfindungsgemässen Vorrichtung ist bzw. sind der Kompressor bzw. der Kompressoren als AGC-Schaltungen (automatic gain control) mit logarithmischer Charakteristik oder als Begrenzerschaltungen mit logarithmischer Charakteristik ausgebildet, die auf einfache Weise eine Gewichtung der empfangenen Signale durchführen.

Bei einer weiteren bevorzugten Ausführungsform der erfindungsgemässen Vorrichtung sind die Bündelbilner an eine optische Lichtquelle angeschlossene Linsensysteme. Jeder der Strahlensammler stellt einen selektiven optischen Sammler dar, dessen Detektor ein optoelektrischer Wandler ist, bzw. die optische Lichtquelle ist ein unmittelbar modulierbares optoelektrisches Halbleiterelement.

Durch diese Lösung ist die Verbindung zwischen Sender- und Empfängerseite durch kostengünstige optische und optoelektrische Mittel realisierbar.

Die erfindungsgemässe Merkmale sind auch in den Ansprüchen festgelegt.

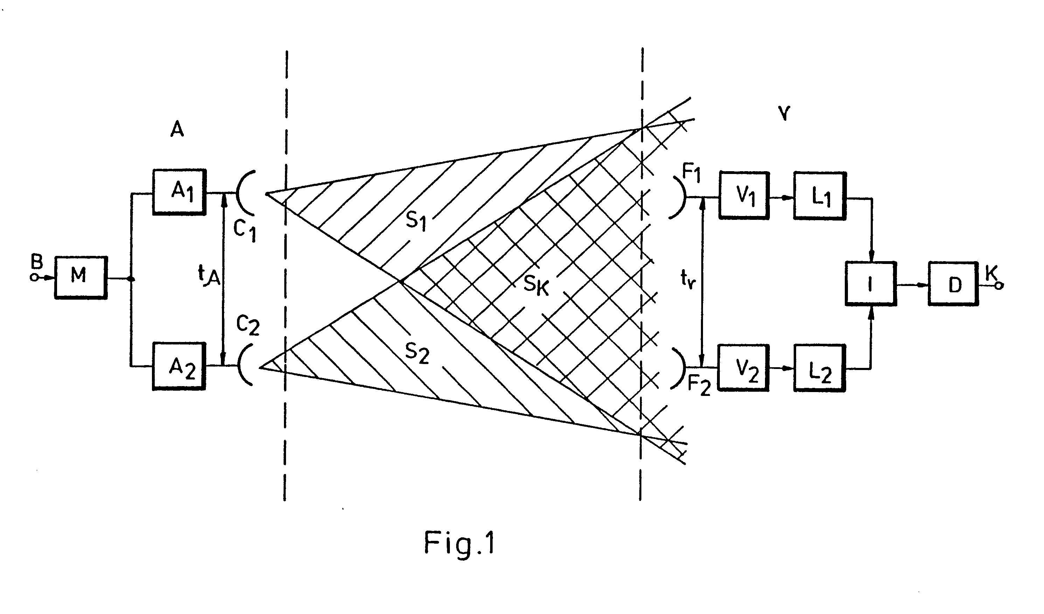

Nachstehend wird die Erfindung und deren weitere Vorteile und Merkmale anhand der beigelegten Zeichnung an einem in der Praxis realisierten Ausführungsbeispiel näher erläutert. Ein Ausführungsbeispiel der zur Durchführung des erfindungsgemässen Verfahrens dienenden Vorrichtung ist in Fig. 1 veranschaulicht.

In Figur 1 ist eine Ausführungsform der erfindungsgemässen Vorrichtung dargestellt, auf deren Senderseite A zwei Sender $A_1$, $A_2$ und auf deren Empfängerseite V zwei Empfänger $V_1$, $V_2$ angeordnet sind. Auf der Senderseite A schliesst sich einem Informationseingang B eine Modulationseinheit M an, die mit den zwei Sendern $A_1$, $A_2$ verbunden ist. Beide Sender $A_1$, $A_2$ sind mit einem Strahlenbündelbildner $C_1$, $C_2$ versehen. Der Strahlungsachsenabstand zwischen den beiden Sendern $A_1$, $A_2$ ist in der Praxis 0,2 m - 3 m, vorzugsweise - gemäss Erfahrungen - 1 - 1,5 m.

Die auf der Empfängerseite V angeordneten Empfänger $V_1$, $V_2$ sind in dem gemeinsamen Strahlenabschnitt $S_K$ der von den Sendern $A_1$, $A_2$ ausgestrahlten kohärent modulierten Strahlenbündel $S_1$, $S_2$ angeordnet. Die Strahlungscharakteristik (Divergenz des Bündels) der Sender $A_1$, $A_2$ und der Sichtwinkel der Empfänger sind derart ausgewählt, dass bei dem vorgegebenen Abstand der Anordnung das Strahlenbündel $S_1$, $S_2$ jeder der Sender $A_1$, $A_2$ - in diesem Ausführungsbeispiel sind zwei Sender $A_1$, $A_2$ verwendet - an jedem - in diesem Ausführungsbeispiel zwei - Empfänger $V_1$, $V_2$ ankommt, wobei ausserdem jeder Empfänger $V_1$, $V_2$ alle, jedoch mindestens zwei Sender wahrnehmen soll. Der Strahlungsachsenabstand $t_A$ zwischen den Sendern $A_1$, $A_2$ auf der Senderseite A stimmt vorzugsweise mit dem Empfängerabstand $t_V$ zwischen den Empfängern $V_1$, $V_2$ auf der Empfängerseite V überein. Die Empfänger $V_1$, $V_2$ sind jeweils mit einem eigenen Strahlensammler $F_1$, $F_2$ versehen und jeweils über einen Kompressor $L_1$, $L_2$ an eine Summiereinheit I angeschlossen, welche mit einem Informationsausgang K verbunden ist.

Die mit zwei Sendern und zwei Empfängern versehene Ausführungsform der erfindungsgemässen Vorrichtung wurde in der Praxis an einer atmosphärischen optischen Nachrichtenübertragungsvorrichtung mit einer Wellenlänge $\lambda$ = 820 nm ausprobiert, die zur digitalen Übertragung mit einer Geschwindigkeit von 2 Mbit/s dient. Die in den Sendern $A_1$, $A_2$ befindlichen Strahlenquellen sind Multimodus-Halbleiterlaser mit einer Spektrumsbandbreite von 2 nm, die im Takt Ausgangsintensität gesteuert sind. Die Strahlenbündelbildner $C_1$, $C_2$ der Sender $A_1$, $A_2$ sind Linsensysteme mit einem Austrittdurchmesser von 50 mm, während die Strahlensammler $F_1$, $F_2$ der Empfänger $V_1$, $V_2$ Linsensysteme mit einem Eintrittdurchmesser von 80 mm sind. In den Empfängern $V_1$, $V_2$ wählt vor einem Photodetektor ein optischer Schmalbandfilter das von den Sendern $A_1$, $A_2$ ausgestrahlte optische Signal aus. Die Empfänger liefern an den Summierer I ein im Verhältnis zu dem Empfangspegel logarithmisch begrenztes Ausgangssignal, somit wird in einem breiten Bereich des Eingangspegels ein verarbeitungsbares summiertes Signal gewonnen.

Bei Verwendung von gleichen Mitteln wurden in einem Sender-Empfängerabstand von 5 km angeordnete Systeme überprüft. Die Qualität der Verbindung bei Verwendung von einem Sender und einem Empfänger war zeitweise nicht zu bewerten infolge des durch die zeitweise auftretende Turbulenz verursachten Bitpaketausfalles und des dadurch hervorgerufenen Synchronverlustes. Eine wesentliche Verbesserung wird auch dann nicht erreicht, wenn neben einem Sender ein mit zwei Detektoren versehenes System verwendet wird. Bei Verwendung der erfindungsgemässen, mit zwei Sendern und einem Empfänger versehenen Vorrichtung mit einem Abstand zwischen den Sendern von 1m ist eine bedeutende Verbesserung der Qualität der Verbindung zu verzeichnen. Es treten keine Unterbrechungen auf. Es kommen Zeitabschnitte mit einem Fehlerverhältnis von $10^{-7}$ vor. In den grössten Teil der Zeit kann jedoch eine Verbindung mit geringerem Fehlerverhältnis, als $10^{-8}$ erreicht werden und zwar auch bei Turbulenzverhältnissen, bei denen das mit einem Sender versehene System infolge der Turbulenz bereits unbrauchbar ist.

Bei Anwendung der Ausführungsform der erfindungsgemässen Vorrichtung, welche mit zwei Sendern und zwei Empfängern versehen ist, kann eine weitere Verbesserung der Qualität erzielt werden, wobei sich ein besseres Fehlerverhältnis als $10^{-8}$ ergibt.

Bei schweren Turbulenzverhältnissen und bei der gleichzeitigen Prüfung von mehreren Übertragungskanälen werden die in der nachstehenden Tabelle angeführten Ergebnisse erzielt:

| Zusammenstellung des Systems | Relativer Bitfehler | Relativer Synchronverlust |
| --- | --- | --- |
| 1 Sender, 1 Empfänger | unbewertbar | 0,1 - 0,15 |
| 1 Sender, 2 Empfänger | unbewertbar | 0,04 - 0,06 |
| 2 Sender, 1 Empfänger | $10^{-6}6 - 10^{-8}$ | 0 |
| 2 Sender, 2 Empfänger | geringer als $10^{-8}$ | 0 |

Es können auch mehr als zwei Sender und mehr als zwei Empfänger verwendet werden. Das kann insbesondere in den Fällen erforderlich sein, wenn der Strahlenweg zwischen dem Sender und dem Empfänger zum Beispiel durch sich bewegende Objekte. Wie z. B. Tiere, Vögel, unterbrochen wird. Ansonsten ergibt die weitere Erhöhung der Anzahl der Sender und Empfänger in erster Linie eine Erhöhung der Reserven. Eine wesentliche Verbesserung der Qualität der Informationsübertragung kann dadurch nicht mehr erreicht werden. In Bezug auf die Sichtweite kann in Abhängigkeit von den örtlichen und atmosphärischen Verhältnissen eine weitere bedeutende Verbesserung verzeichnet werden.

Zur Erreichung einer wechselseitigen Übertragung kann jeweils ein Sender und ein Empfänger zusammengebaut werden.

**Patentansprüche**

1. Verfahren zur Übertragung von Informationen im Freien mittels elektromagnetischer Wellen mit gerichtetem Strahlenbündel und einer Wellenlänge kleiner als 10 mm, wobei die elektromagnetische Welle die zu übertragende Information in modulierter Form enthält, dadurch *gekennzeichnet*, daß von der Senderseite mindestens zwei kohärent modulierte Strahlenbündel zur Empfängerseite in einem Strahlungsachsenabstand von mindestens 200 mm bis höchstens 3000 mm, jedoch mindestens gleich dem 100fachen der Wellenlänge $\lambda$ der jeweils verwendeten elektromagnetischen Welle, derart gerichtet werden, daß sich die Bündel auf der Empfängerseite schneiden, weiterhin auf der Empfängerseite die gemeinsame Intensität der sich schneidenden Bündel detektiert wird und die Information aus dem sich bei der Detektion ergebenden Signal reproduziert wird.

2. Verfahren nach Anspruch 1, dadurch *gekennzeichnet*, daß die gemeinsame Intensität der sich schneidenden Strahlenbündel auf der Empfängerseite an mindestens zwei, voneinander in einem Achsenabstand von mindestens 200 mm bis höchstens 3000 mm, jedoch mindestens gleich dem 100fachen der Wellenlängen $\lambda$ der jeweils verwendeten elektromagnetischen Welle, befindlichen Empfangsstellen detektiert wird und die Information nach der Summierung der sich aus der Detektion ergebenden Signale reproduziert wird.

3. Verfahren nach Anspruch 2, dadurch *gekennzeichnet*, dass die detektierten Intensitäten der in den Empfängern ($V_1$, $V_2$) ankommenden Strahlenbündel ($S_1$, $S_2$) analog summiert werden.

4. Verfahren nach Anspruch 3, dadurch *gekennzeichnet*, dass die bei der Detektion erhaltenen Signale komprimiert und danach summiert werden.

5. Verfahren nach Anspruch 3 oder 4, *dadurch gekennzeichnet*, dass das summierte Signal komprimiert wird.

6. Verfahren nach einem der Ansprüche 1 bis 5, *dadurch gekennzeichnet*, dass die Intensität der Strahlenbündel moduliert wird.

7. Verfahren nach Anspruch 6, *dadurch gekenn-*

*zeichnet*, dass die Intensitätsmodulation durch Ein- und Ausschalten durchgeführt wird.

8. Verfahren nach Anspruch 6 oder 7, *dadurch gekennzeichnet*, dass als Informationsträger intensitätsmodulierte Strahlenbündel ($S_1$, $S_2$) mit verteilten Frequenzspektrum verwendet werden und die Spektrumsbreite der Strahlenbündel ($S_1$, $S_2$) mindestens das Zweifache der Bandbreite des Modulationssignales ist.

9. Verfahren nach einem der Ansprüche 1 bis 8, dadurch *gekennzeichnet*, daß auf der Senderseite (A) mindestens zwei Sender ($A_1$, $A_2$), in einem Strahlungsachsenabstand ($t_A$) von mindestens 200 mm bis höchstens 3000 mm, jedoch mindestens gleich dem 100fachen der Wellenlänge $\lambda$ der jeweils verwendeten elektromagnetischen Welle, angeordnet werden, danach von den Sendern ($A_1$, $A_2$) miteinander kohärent modulierte Strahlenbündel ($S_1$, $S_2$) zur Empfangsstelle derart gerichtet werden, daß sich die Strahlenbündel ($S_1$, $S_2$) auf der Empfängerseite (V) schneiden, wobei auf der Empfängerseite (V) in dem gemeinsamen Strahlensegment der Strahlenbündel ($S_1$, $S_2$) ein Empfänger oder mehrere Empfänger ($V_1$, $V_2$) in einem Empfangsabstand ($t_V$) von mindestens 200 mm bis höchstens 3000 mm, jedoch mindestens gleich dem 100fachen der Wellenlänge $\lambda$ der jeweils verwendeten elektromagnetischen Welle, angeordnet werden, wonach der/die Empfänger ($V_1$, $V_2$) derart ausgerichtet werden, daß jeder der Empfänger ($V_1$, $V_2$) in einen gemeinsamen Strahlungsabschnitt ($S_k$) von mindestens zwei Sendern ($A_1$, $A_2$) fällt, daß weiterhin die gemeinsame Intensität der in dem/den Empfängern ($V_1$, $V_2$) ankommenden Strahlenbündel ($S_1$, $S_2$) detektiert und gemessen wird, und vorzugsweise bei Wahl des sich in Abhängigkeit von der Zeit ändernden Wertes der gemeinsamen Intensität als Parameter nach einer logarithmischen Kompression und gegebenenfalls nachfolgender Summierung erfolgenden Entscheidung die übertragene Information reproduziert wird.

10. Vorrichtung zur Durchführung des Verfahrens nach Anspruch 1, die auf der Senderseite (A) einen mit einem Bündelbilder versehenen Sender aufweist, welcher an eine mit einem Informationseingang (B) verbundene Modulationseinheit (M) angeschlossen ist, während auf der Empfängerseite (V) ein mit einem Strahlensammler versehener, über einen Auswerter (D) mit einem Informationsausgang (K) verbundener Empfänger angeordnet ist, dadurch *gekennzeichnet*, daß auf der Senderseite (A) an den Modulator (M) mindestens zwei, in einem Abstand ($t_A$) von mindestens 200 mm bis höchstens 3000 mm, jedoch mindestens gleich dem 100fachen der Wellenlänge $\lambda$ der jeweils verwendeten elektromagnetischen Welle, voneinander angeordnete, mit einem Bündelbilder ($C_1$, $C_2$) versehene Sender ($A_1$, $A_2$) angeschlossen sind, wobei jeweils zwei Sender ($A_1$, $A_2$) an denselben Empfänger ($V_1$ bzw. $V_2$) gerichtet sind.

mindestens zwei, voneinander in einem Abstand (tv) von mindestens 200 mm bis höchstens 3000 mm, jedoch mindestens gleich dem 100fachen der Wellenlänge λ der jeweils verwendeten elektromagnetischen Welle, angeordnete, mit einem Strahlensammler (F$_1$, F$_2$) versehene Empfänger (V$_1$, V$_2$) angeordnet sind, die über einen Summierer (I) an die Auswerter (D) angeschlossen sind, wobei jeder Empfänger (V$_1$, V$_2$) mindestens an zwei Sender (A$_1$, A$_2$) gerichtet ist.

12. Vorrichtung nach Anspruch 10, *dadurch gekennzeichnet*, dass zwischen den Empfängern (V$_1$, V$_2$) und dem Summierer (I) Kompressoren (L$_1$, L$_2$) angeordnet sind.

13. Vorrichtung nach Anspruch 12, *dadurch gekennzeichnet*, dass der auf der Enpfängerseite (V) befindliche Kompressor (L$_1$, L$_2$) eine AGC-Schaltung mit logarithmischer Charakteristik ist.

14. Vorrichtung nach Anspruch 11 oder 12, *dadurch gekennzeichnet*, dass zwischen dem Summierer (I) und dem Auswerter (D) ein Kompressor angeordnet ist.

15. Vorrichtung nach Anspruch 12 oder 14, *dadurch gekennzeichnet*, dass der auf der Empfängerseite (V) befindliche Kompressor (L$_1$, L$_2$) eine Limiterschaltung mit logarithmischer Charakteristik ist.

16. Vorrichtung nach Anspruch 10 oder 11, *dadurch gekennzeichnet*, dass auf der Senderseite (A) an den Informationseingang (B) eine Modulationseinheit (M) angeschlossen ist, an welche mindestens zwei Sender (A$_1$, A$_2$) angeschlossen sind, von denen jeder mit einem Bündelbilder (C$_1$, C$_2$) versehen ist, desweiteren auf der Empfängerseite (V) ein oder mehrere Empfänger (V$_1$, V$_2$) angeordnet sind, wobei jeder der Empfänger (V$_1$, V$_2$) einen Strahlensammler (F$_1$, F$_2$) aufweist und über den Kompressor (L$_1$, L$_2$) an den Summierer (I) angeschlossen ist, welcher über den Auswerter (D) an den Informationsausgang (K) angeschlossen ist.

17. Vorrichtung nach einem der Ansprüche 10 bis 16, *dadurch gekennzeichnet*, dass der Strahlenbündelbilder (C$_1$, C$_2$) an eine optische Lichtquelle angeschlossene Linsensysteme ist und der Strahlensammler (F$_1$, F$_2$) ein selektiver optische Sammler ist, dem als Detektor ein optoelektrischer Wandler zugeordnet ist.

18. Vorrichtung nach Anspruch 17, *dadurch gekennzeichnet*, dass die optische Lichtquelle ein unmittelbar modulierbares optoelektrisches Halbleiterelement ist.

## Claims

1. Method for the transmission of information in the open by means of electro-magnetic waves with directed ray beam and a wavelength less than 10 mm, where the electro-magnetic wave contains in modulated form the information to be transmitted, characterised in that from the transmitter side at least two coherently modulated ray beams are directed to the receiver side at a radiation axis interval of at least 200 mm to at most 3 000 mm, but at least equal to 100 times the wave length λ of the electromagnetic wave used in each case, in such a way that the beams intersect on the receiver side, furthermore on the receiver side the combined intensity of the intersecting beams is detected and the information is reproduced from the signal occurring in the detection.

2. Method according to Claim 1, characterised in that the combined intensity of the intersecting ray beams is detected on the receiver side at at least two reception points situated at an axial distance from one another of at least 200 mm to at most 3 000 mm, but at least equal to 100 times the wave length λ of the electro-magnetic wave used in each case, and the information is reproduced after the totalling of the signals resulting from the detection.

3. Method according to Claim 2, characterised in that the detected intensities of the ray beams (S$_1$, S$_2$) arriving in the receivers (V$_1$, V$_2$) are totalled in analog manner.

4. Method according to Claim 3, characterised in that the signals obtained in the detection are compressed and then totalled.

5. Method according to Claim 3 or 4, characterised in that the totalled signal is compressed.

6. Method according to one of Claims 1 to 5, characterised in that the intensity of the ray beams is modulated.

7. Method according to Claim 6, characterised in that the intensity-modulation is effected by switching on and off.

8. Method according to Claim 6 or 7, characterised in that intensity-modulated ray beams (S$_1$, S$_2$) with distributed frequency spectrum are used as information carriers and the spectrum width of the ray beams (S$_1$, S$_2$) is at least twice the band width of the modulation signal.

9. Method according to one of Claims 1 to 8, characterized in that on the transmitter side (A) at least two transmitters (A$_1$, A$_2$) are arranged at a radiation axis interval (t$_A$) of at least 200 mm to at most 3000 mm, but at least equal to 100 times the wave length λ of the electro-magnetic wave used in each case, thereafter ray beams (S$_1$, S$_2$) coherently modulated with one another are directed to the reception point by the transmitters (A$_1$, A$_2$) in such a way that the ray beams (S$_1$, S$_2$) intersect on the receiver side (V), while on the re- ted to the reception point by the transmitters (A$_1$, A$_2$) in such a way that the ray beams (S$_1$, S$_2$) intersect on the receiver side (V), while on the receiver side (V) in the common ray segment of the ray beams (S$_1$, S$_2$) one or more receivers (V$_1$, V$_2$) is or are arranged at a reception interval (t$_V$) of at least 200 mm to at most 3000 mm, but at least equal to 100 times the wave length λ of the electro-magnetic wave used in each case, whereafter the receiver(s) (V$_1$, V$_2$) is/are aligned in such a way that each of the receivers (V$_1$, V$_2$) falls into a common radiation section (S$_k$) of at least two transmitters (A$_1$, A$_2$), that further the combined intensity of the ray beams (S$_1$, S$_2$) arriving in the receiver(s) (V$_1$, V$_2$) is detected and measured, and preferably on selection of the value of the combined intensity, varying in dependence upon time, as parameter, the transmitted information is reproduced after a decision taking place according to a logarithmic compression and possibly subsequent totalling.

10. Apparatus for carrying out the method according to Claim 1, which comprises on the transmitter side (A) a transmitter provided with a beam former, which is connected to a modulation unit (M) connected with an information input (B), while on the receiver side (V) there is arranged a receiver provided with a ray collector and connected through an evaluator (D) with an information output (K), characterised in that on the transmitter side (A) at least two transmitters (A$_1$, A$_2$) arranged at a distance (t$_A$) from one another of at least 200 mm to at most 3000 mm but at least equal to 100 times the wave length λ of the electro-magnetic wave used in each case and provided with a beam former (C$_1$, C$_2$) are connected to the modulator (M), in each case two transmitters (A$_1$, A$_2$) being directed to the same receiver (V$_1$ or V$_2$).

11. Apparatus according to Claim 10, characterised in that on the receiver side (V) there are arranged at least two receivers (V$_1$, V$_2$) provided with a ray collector (F$_1$, F$_2$) and arranged at a distance (t$_V$) from one another of at least 200 mm to at most 3000 mm, but at least equal to 100 times the wave length λ of the electromagnetic wave used in each case, which receivers are connected through a totaller (I) to the evaluators (D), while each receiver (V$_1$, V$_2$) is directed at least to two transmitters (A$_1$, A$_2$).

12. Apparatus according to Claim 10, characterised in that compressors (L$_1$, L$_2$) are arranged between the receivers (V$_1$, V$_2$) and the totaller (I).

13. Apparatus according to Claim 12, characterised in that the compressor (L$_1$, L$_2$) situated on the receiver side (V) is an AGC circuit with logarithmic characteristic.

14. Apparatus according to Claim 11 or 12, characterised in that a compressor is arranged between the totaller (I) and the evaluator (D).

15. Apparatus according to Claim 12 or 14, characterised in that the compressor (L$_1$, L$_2$) situated on the receiver side (V) is a limiter circuit with logarithmic characteristic.

16. Apparatus according to Claim 10 or 11, characterised in that on the transmitter side (A) to the information input (B) there is connected a modulation unit (M) to which at least two transmitters (A$_1$, A$_2$) are connected each of which is provided with a beam former (C$_1$, C$_2$), furthermore one or more receivers (V$_1$, V$_2$) are arranged on the receiver side (V), each of the receivers (V$_1$, V$_2$) comprising a ray collector (F$_1$, F$_2$) and being connected through the compressor (L$_1$, L$_2$) to the totaller (I) which is connected through the evaluator (D) to the information output (K).

17. Apparatus according to one of Claims 10 to 16, characterised in that the ray beam former (C$_1$, C$_2$) is a lens system connected to an optical light source and the ray collector (F$_1$, F$_2$) is a selective optical collector with which there is associated as detector an opto-electrical transducer.

18. Apparatus according to Claim 17, characterised in that the optical light source is a directly modulatable opto-electrical semi-conductor element.

**Revendications**

1. Procédé de transmission atmosphérique d'informations au moyen d'ondes électromagnétiques a faisceaux de rayons dirigés et d'une longueur d'onde allant jusqu'à 10 mm, l'onde électromagnétique contenant les informations à transmettre sous une forme modulée, caractérisé en ce que l'on dirige, côté émetteur, au moins deux faisceaux cohérents et modulés de rayons vers le côté récepteur, avec une distance entre axes de rayonnement comprise entre 200 et au plus 3000 mm, tout en étant toutefois au moins égale au centuple de la longueur d'onde λ de chaque onde électromagnétique utilisée, ceci de manière que les faisceaux se coupent du côté récepteur, qu'en outre, l'intensité des faisceaux combinée se coupant est détectée et que les informations provenant du signal résultant de la détection sont reproduites.

2. Procédé selon la revendication 1, caractérisé en ce que l'intensité combinée des faisceaux se coupant est détectée du côté récepteur en au moins deux points de réception se trouvant à une distance axiale réciproque compris entre 200 mm et au plus 3000 mm, tout en étant toutefois au moins égale au centuple de la longueur d'onde λ de l'onde électromagnétique utilisée et que les informations sont reproduites après addition des signaux résultant de la détection.

3. Procédé selon le revendication 2, caractérisé en ce que les intensités détectées des faisceaux d'ondes (S$_1$, S$_2$) arrivant dans les récepteurs (V$_1$, V$_2$) sont additionnées de manière analogique.

4. Procédé selon la revendication 3, caractérisé en ce que les signaux reçus lors de la détection sont comprimés puis additionnés.

5. Procédé selon la revendication 3 ou 4, caractérisé en ce que le signal d'addition est comprimé.

6. Procédé selon l'une des revendications 1 à 5, caractérisé en ce que l'intensité des faisceaux d'ondes est modulée.

7. Procédé selon la revendication 6, caractérisé en ce que la modulation d'intensité est exécutée par connexion et déconnexion.

8. Procédé selon la revendication 6 ou 7, caractérisé en ce que le faisceau de rayons (S$_1$, S$_2$) dont l'intensité est modulée est utilisé comme support d'information avec un spectre de fréquence réparti et la largeur du spectre des faisceaux de rayons (S$_1$, S$_2$) vaut au moins le double de la largeur de bande du signal de modulation.

9. Procédé selon l'une des revendications 1 à 8, caractérisé en ce que, du côté émetteur (A), au moins deux émetteurs (A$_1$, A$_2$) sont disposés avec un espacement des axes de rayonnement (t$_A$)compris entre 200 mm et au plus 3000 mm, tout en étant toutefois au moins égal au centuple de la longueur d'onde λ de l'onde électromagnétique chaque fois utilisée, des faisceaux d'ondes (S$_1$, S$_2$) modulés et cohérents entre eux étant ensuite dirigés depuis les émetteurs (A$_1$, A$_2$) vers le point de réception, de manière que les faisceaux de rayons (S$_1$, S$_2$) se coupent du côté récepteur (V), un ou plusieurs récepteurs (V$_1$, V$_2$) étant disposés du côté récepteur (V), dans le segment de rayon commun des faisceaux de rayons (S$_1$, S$_2$), avec un espacement de réception (t$_V$) compris entre 200 mm et au plus 3000 mm, tout en étant toutefois au moins égal au centuple de la longueur d'onde λ de l'onde électromagnétique utilisée, à la suite de quoi le ou les récepteurs (V$_1$, V$_2$) sont dirigés de sorte que chacun des récepteurs (V$_1$, V$_2$) tombe dans un segment de rayonnement (S$_k$) commun, en ce qu'en outre l'intensité combinée des faisceaux de rayons (S$_1$, S$_2$) arrivant dans le ou les récepteurs (V$_1$, V$_2$) est détectée et mesurée, et les informations transmises étant reproduites de préférence en choisissant comme paramètre la valeur variable en fonction du temps de l'intensité combinée, après une compression logarithmique et une décision suivie, le cas échéant, d'une addition.

10. Dispositif pour l'exécution du procédé selon la revendication 1, qui présente du côté émetteur (A) un émetteur pourvu d'un formateur de faisceau, qui est raccordé à une unité de modulation (M) reliée à une entrée des informations (B), tandis que, du côté récepteur (V), on dispose un récepteur pourvu d'un collecteur de rayons et relié à une sortie d'informations (K) par l'intermédiaire d'un analyseur (D), caractérisé en ce que, du côté émetteur (A), au moins deux émetteurs (A$_1$, A$_2$) pourvus d'un formateur de faisceau (C$_1$, C$_2$) sont raccordés, à une distance réciproque (t$_A$) compris entre 200 mm et au plus 3000 mm, tout en étant toutefois au moins égale égale au centuple de la longueur d'onde λ de l'onde électromagnétique utilisée, deux émetteurs (A$_1$, A$_2$) étant chacun dirigés sur les mêmes récepteurs (V$_1$, V$_2$).

11. Dispositif selon la revendication 10, caractérisé en ce que, du côté émetteur (V), au moins deux récepteurs (V$_1$, V$_2$) pourvus d'un collecteur de rayon (F$_1$, F$_2$) sont disposés, à une distance (t$_V$) réciproque comprise entre 200 mm cet au plus 3000 mm, tout en étant toutefois au moins égale au centuple de la longueur d'onde λ de l'onde électromagnétique utilisée, et raccordés aux analyseurs (D) par l'intermédiaire d'un additionneur (I), chaque récepteur (V$_1$, V$_2$) étant dirigé au moins sur deux émetteurs (A$_1$, A$_2$).

12. Dispositif selon la revendication 10, caractérisé en ce que des compresseurs (L$_1$, L$_2$) sont disposés entre les récepteurs (V$_1$, V$_2$) et l'additionneur (I).

13. Dispositif selon la revendication 12, caractérisé en ce que le compresseur (L$_1$, L$_2$) se trouvant du côté récepteur (V) est un circuit AGC (à contrôle automatique du gain) à caractéristique logarithmique.

14. Dispositif selon la revendication 11 ou 12, caractérisé en ce qu'un compresseur est disposé entre l'additionneur (I) et l'analyseur (D).

15. Dispositif selon la revendication 12 ou 14, caractérisé en ce que le compresseur (L$_1$, L$_2$) se trouvant du côté récepteur (V) est un circuit limiteur à caractéristique logarithmique.

16. Dispositif selon la revendication 10 ou 11, caractérisé en ce qu'on raccorde à l'entrée d'information (B), du côté émetteur (A), une unité de modulation (M) à laquelle sont raccordés au moins deux émetteurs (A$_1$, A$_2$), dont chacun est pourvu d'un formateur de faisceau (C$_1$, C$_2$), qu'un ou plusieurs récepteurs (V$_1$,V$_2$) sont en outre disposés sur le côté récepteur (V), chacun des récepteurs (V$_1$ ,V$_2$) présentant un collecteur de rayon (F$_1$, F$_2$) et étant raccordé, par l'intermédiaire du compresseur (L$_1$, L$_2$), à l'additionneur (I) qui est raccordé à la sortie de l'information (K) par l'intermédiaire de l'analyseur (D).

17. Dispositif selon l'une des revendications 10 à 16, caractérisé en ce que le formateur de faisceaux de rayons (C$_1$, C$_2$) est un système à lentilles raccordé à une source de lumière et que le collecteur de rayons (F$_1$, F$_2$) est un collecteur optique sélectif à qui est associé un convertisseur optoélectrique servant de détecteur.

18. Dispositif selon la revendication 17, caractérisé en ce que la source de lumière est un élément optoélectrique à semi-conducteurs directement modulable.

Fig.1

EP 0 192 730 B1